# EUROPEAN PATENT SPECIFICATION

(11) **EP 0 488 980 B1**
(45) Date of publication and mention of the grant of the patent: **18.07.2001**
(21) Application number: 91870173.1
(22) Date of filing: 05.11.1991
(51) Int. Cl.: C09D 5/02, C09D 7/12

(54) **Use of acid-base indicators for improving the wet hiding power of emulsion paints**
Verwendung von Säure-Base-Indikatoren zur Verbesserung der Nassdeckkraft von Emulsionsfarben
Utilisation d' indicateurs acidic-base pour améliorer le pouvoir couvrant de peintures en émulsion

(30) Priority: 05.11.1990 EP 90121125
(43) Date of publication of application: 03.06.1992
(73) Proprietor: FINA RESEARCH S.A., B-7181 Feluy (BE)
(72) Inventor: Jongerius, Marcellus Gerardus, NL-3732 DX De Bilt (NL); Spierdijk, Ronald Johannes, NL-1078 LE Amsterdam (NL)

(56) References cited:
- CH-A- 464 415
- Paint/coatings dictionary, Federation of societies for coatings technology,1978, p. 310
- Kirk-Othmer, Encyclopedia of Chemical Technology, (3), Vol. 6, p. 427 Ullmanns Encyklopädie der technischen Chemie (4), Band 15, S. 613
- Paint/coatings dictionary, Federation of societies for coatings technology,1978, p. 310

## Description

The present invention relates to the use of a wet hiding power developing system for obtaining emulsion paints having substantially equal wet and dry hiding powers.

It is known from Japanese Patent Application nr. 60-170764 (1985, S. Aoyanagi et al. to K.K. Toshiba) that the addition of a basic substance and a color-developing indicator to a varnish allows to improve the application workability, by easily distinguishing the coated portions and the uncoated portions during application, whilst leaving a transparent varnish film after drying. However, both wet (coloured) and dry (transparent) varnish films according to this disclosure show no hiding power.

CH-A-464415 discloses the addition of a coloured component to adhesives or paints, which colour disappears or loses its intensity upon drying, to facilitate application when the adhesive or paint has the same colour as the substrate or is transparent.

Many emulsion paints, especially high-pigmented ones, inherently have a lower hiding power when wet than when dry. As a consequence, it is necessary to add an excess of titanium dioxide in order to obtain a sufficient wet hiding power. Titanium dioxide being more expensive than water, there is thus a need in the art for a process for improving the wet hiding power of emulsion paints, more particularly for obtaining substantially equal wet and dry hiding powers.

The object of the invention is to improve the wet hiding power of emulsion paints by introducing a wet hiding power developing system which does not alter the dry hiding power.

Emulsion paint compositions essentially consist of a dispersion in water of one or more binders, one or more pigments, one or more fillers, optionally one or more dyes, and generally one or more additives.

As optical properties are related to the volume of the pigment, one of the concepts used in this art is the pigment volume concentration (hereinafter pvc) : the pvc is the volume of pigments and fillers relative to the total volume of the dry paint film. As the pvc increases, a value is reached at which there is insufficient medium to completely surround the particles of pigments and fillers. That concentration is known as the critical pigment volume concentration (cpvc). Low pvc emulsion paints, as used herein, are paints formulated below the cpvc, while high pvc emulsion paints are formulated above the cpvc.

The hiding power of a white paint depends on the scattering of the incident light, which itself depends on the refractive index of the various components involved. The dominant position of TiO₂ (more particularly of the rutile form thereof) as white pigment is explained by its high refraction index of 2.7, to be compared with typical values of about 1.5 for paint binders. Extenders or fillers are defined as having a refractive index similar to typical paint binders, and thus do not contribute to the hiding power in a dry emulsion paint.

In high pvc emulsion paints, water (refractive index = 1.3) present in the wet paint is replaced by air voids (refractive index = 1.0) in the dry film, thereby in most cases causing an increase in hiding power. Thus, those emulsion paints having a wet hiding power below their dry hiding power had before this invention to be formulated with an excess of titanium dioxide over the amount that is required to obtain the desired dry hiding power. The use of this invention is however not restricted to high pvc paints, nor to emulsion paints having a wet hiding power below their dry hiding power.

It has now been found that the wet hiding power of an emulsion paint composition can be increased by introducing therein a developing system which does not alter the dry hiding power.

In a preferred mode for carrying out the invention, there is added to the emulsion paint of which the wet hiding power is to be increased, a small amount of an acid-base indicator, said indicator being colourless when under acid form and having a pKₐ value comprised between 6 and 10, preferably between 7 and 9, and sufficient basic material to develop the coloured basic form. The pKₐ value is defined as pKₐ = - log (H⁺) (A⁻)/(HA) wherein HA and A⁻ represent the acid and basic forms respectively and wherein brackets are used instead of the usual square brackets to indicate concentrations.

As suitable acid-base indicators, there may be cited (ranked by incrasing pKₐ values) 6,8-dinitro-2,4-(1H)quinazolinedione (yellow when under basic form), m-nitrophenol (yellow), o-cresolphthalein (red), phenolphthalein (pink), ethyl-bis(2,4-dimethylphenyl)acetate (blue), thymolphthalein (blue), and mixtures thereof.

The acid-base indicator concentration and the pH value required in the emulsion paint are easily determined : the intensity of the colour developed depends (i) on the inherent intensity of the colour of the basic form of the acid-base indicator and (ii) on the actual concentration of said basic form, which itself depends on the pH of the paint according to the known equation (A⁻) = 10⁻pKₐ/(10⁻pKₐ + 10-pH) = Kₐ/(Kₐ + (H⁺)). Typical values of indicator concentration range from 0.001 to 4 wt % (based on the emulsion paint), preferably from 0.01 to 0.3 wt %.

Any basic substance may be used to reach the desired pH value; discolouration of the acid-base indicator will be caused by the reaction of the basic substance with the atmospheric carbon dioxide (and by evaporation of any volatile basic substance present). As examples of basic substances, there may be cited sodium hydroxide, ammonia, 2-amino-2-methyl-1-propanol, 2-dimethylamino-2-methyl-1-propanol, and mixtures thereof.

In addition to increasing the wet hiding power, the invention also provides emulsion paints which have a colour when wet that is different from their colour when dry (a distinct advantage when the substrate has the same colour as the dry paint). Both advantages require that the intensity of the colour developed in the wet emulsion paint should last sufficiently, else the hiding power of the still wet coating would wrongly appear insufficient while the still wet coating might no longer be distinguished from a substrate of the same colour as the dry paint. Controlling how long the colour intensity (and hence the increased wet hiding power) remains substantially constant is most easily achieved by adjusting the buffer capacity of the basic emulsion paint.

This invention is neither limited to any type of binder dispersion, nor to any type of pigment or filler. It will be further described by way of the following examples which are not intended to restrict the scope of the invention.

### Example 1 and comparative example A

Two emulsion paints were prepared with the following composition (all figures in wt %) :
- titanium dioxide powder (rutile form, average diameter 0.0003mm) 5.00
- aluminium silicate powder 4.00
- chlorite powder 10.00
- calcium carbonate powder 24.00
- opacity polymer 5.00
- acrylic polymer (Repolem ^{TM} 2126) as 60% dispersion in water (i.e. 4.80 wt % of acrylic polymer) 8.00
- 2-amino-2-methyl-1-propanol 2.00
- sodium hydroxide 0.08
- water and additives 41.82
- phenolphthalein (example 1) or additional water (comparative example A) 0.10

The pH of the paints was of 10.77 (example 1) or 10.80 (comparative example A).

The wet hiding power was determined using the international standard ISO-2814-1973, with the following particulars :
- Erichsen block applicator model 288/120
- wet layer thickness : 0.15mm
- opacity chart form 2A from the Leneta Company
- wet paint films immediately covered with a clear transparent film
- Macbeth MM 2200 spectrophotometer.

The hiding power measurements gave the following results :

| | Example 1 | Comp. example A |
|---|---|---|
| wet film | 98.1% | 93.7% |
| dry film | 98.3% | 98.3% |

### Example 2 and comparative example B

Two emulsion paints were prepared with the following composition (all figures in wt %) :
- titanium dioxide powder (rutile form, average diameter 0.0003mm) 5.00
- aluminium silicate powder 4.00
- chlorite powder 10.00
- calcium carbonate powder 24.00
- opacity polymer 5.00
- acrylic polymer (Repolem ^{TM} 2126) as 60% dispersion in water (i.e. 4.80 wt % of acrylic polymer) 8.00
- sodium hydroxide 0.30
- water and additives 43.65
- phenolphthalein (example 2) or additional water (comparative example B) 0.05

The pH of the paints was of 11.27 (example 2) or 11.31 (comparative example B).

The wet hiding power was determined according to the procedure described in example 1.

The hiding power measurements gave the following results :

| | Example 2 | Comp. example B |
|---|---|---|
| wet film | 98.0% | 93.8% |
| dry film | 98.1% | 98.2% |

## Claims

1. Use of a wet hiding power developing system to improve the wet hiding power of emulsion paints, said system providing emulsion paints which have a colour when wet that is different from their colour when dry, wherein the system consists of an acid-base indicator, and sufficient basic material to develop the coloured basic form.

2. Use according to claim 1, wherein the indicator is colourless when under acidic form and has a pKₐ value comprised between 6 and 10.

3. Use according to claim 2, wherein the indicator has a pKₐ value comprised between 7 and 9.

4. Use according to any one of claims 1 to 3, wherein the indicator is used in an amount of from 0.001 to 4 wt%, based on the emulsion paint.

5. Use according to claim 4, wherein the indicator is used in an amount of from 0.01 to 0.3 wt%, based on the emulsion paint.

6. Use according to claim 2, wherein the indicator is selected from the group consisting of 6,8-dinitro-2,4-(1H)quinazoiinedione, m-nitrophenol, o-cresolphthalein, phenolphthalein, ethyl- bis(2,4-dimethylphenyl)acetate, thymolphthalein, and mixtures thereof.

7. Use according to any one of claim 1 to 6 wherein the basic emulsion paint is buffered.

8. Emulsion paint compositions characterised in that they contain a wet hiding power developing system to improve the wet hiding power of emulsion paints, said system providing emulsion paints which have a colour when wet that is different from their colour when dry, wherein the system consists of an acid-base indicator, and sufficient basic material to develop the coloured basic form.

9. Emulsion paint compositions according to claim 9, wherein the indicator is colourless when under acidic form and has a pKₐ value comprised between 6 and 10.

10. Emulsion paint compositions according to claim 9, wherein the indicator has a pKₐ value comprised between 7 and 9.

11. Emulsion paint compositions according to any one of claims 8 to 10, wherein the indicator is used in an amount of from 0.001 to 4 wt%, based on the emulsion paint.

12. Emulsion paint compositions according to claim 11, wherein the indicator is used in an amount of from 0.01 to 0.3 wt%, based on the emulsion paint.

13. Emulsion paint compositions according to claim 9, wherein the indicator is selected from the group consisting of 6,8-dinitro-2,4-(1H)quinazolinedione, m-nitrophenol, o-cresolphtalein, phenolphthalein, ethyl- bis(2,4-dimethylphenyl)acetate, thymolphthalein, and mixtures thereof.

14. Emulsion paint compositions according to any one of claim 8 to 13 wherein the basic emulsion paint is buffered.

## Patentansprüche

1. Verwendung eines Entwicklungssystems mit Naßdeckfähigkeit zum Verbessern der Naßdeckfähigkeit von Emulsionsanstrichfarben, wobei das System Emulsionsanstrichfarben zur Verfügung stellt, die eine Farbe haben, die, wenn naß, unterschiedlich von ihrer Farbe, wenn trocken ist, wobei das System aus einem Säure-Base Indikator und ausreichend basischem Material zum Entwikeln der gefärbten basischen Form besteht.

2. Verwendung nach Anspruch 1, wobei der Indikator farblos ist, wenn unter saurer Form, und einen pKa Wert, enthalten zwischen 6 und 10, hat.

3. Verwendung nach Anspruch 2, wobei der Indikator einen pKa Wert, enthalten zwischen 7 und 9, hat.

4. Verwendung nach einem der Ansprüche 1 bis 3, wobei der Indikator in einer Menge von 0,001 bis 4 Gew.%, basierend auf der Emulsionsanstrichfarbe, verwendet wird.

5. Verwendung nach Anspruch 4, wobei der Indikator in einer Menge von 0,01 bis 0,3 Gew.%, basierend auf der Emulsionsanstrichfarbe, verwendet wird.

6. Verwendung nach Anspruch 2, wobei der Indikator aus der Gruppe, bestehend aus 6,8-Dinitro-2,4-(1H)Chinazolindion, m-Nitrophenol, o-Cresolphthalein, Phenolphthalein, Ethyl-bis(2,4-dimethylphenyl)acetat, Thymolphthalein und Mischungen davon ausgewält ist.

7. Verwendung nach einem der Ansprüche 1 bis 6, wobei die basische Emulsionsanstrichfarbe gepuffert ist.

## Revendications

1. Utilisation d'un système améliorant le pouvoir couvrant à l'état mouillé pour améliorer le pouvoir couvrant à l'état mouillé de peintures en émulsion, ce système fournissant des peintures en émulsion qui comportent une couleur à l'état mouillé qui est différente de leur couleur à l'état sec, où le système consiste en un indicateur acide-base et une matière basique suffisante pour développer la forme basique colorée.

2. Utilisation selon la revendication 1, où l'indicateur est incolore lorsqu'il est sous forme acide et a une valeur de pKₐ entre 6 et 10.

3. Utilisation selon la revendication 2 où l'indicateur a une valeur de pKₐ comprise entre 7 et 9.

4. Utilisation selon l'une quelconque des revendications 1 à 3, où l'indicateur est utilisé en une quantité de 0,001 à 4% en poids basé sur la peinture en émulsion.

5. Utilisation selon la revendication 4, où l'indicateur est utilisé en une quantité de 0,01 à 0,3% en poids, basé sur la peinture en émulsion.

6. Utilisation selon la revendication 2, où l'indicateur est choisi dans le groupe consistant en 6,8-dinitro-2,4-(1H)quinazolinédione, m-nitrophénol, o-crésolphtaléine, phénolphtaléine, bis(2,4-diméthylphényl)acétate d'éthyle, thymolphthaléine, et des mélanges de ceux-ci.

7. Utilisation selon l'une quelconque des revendications 1 à 6 où la peinture en émulsion basique est tamponnée.
